# NEW EUROPEAN PATENT SPECIFICATION

(11) **EP 1 532 325 B2**
(45) Date of publication and mention of the opposition decision: **11.06.2014**
(45) Mention of the grant of the patent: 06.05.2009
(21) Application number: 03752967.4
(22) Date of filing: 16.05.2003
(51) Int. Cl.: E04B 2/02, E04C 1/42, B28B 23/00

(54) **BUILDING BLOCK COMPRISING LIGHT TRANSMITTING FIBRES AND A METHOD FOR PRODUCING THE SAME**
BAUSTEIN MIT LICHTDURCHLûSSIGEN FASERN UND VERFAHREN ZUR HERSTELLUNG DESSELBEN
BLOC DE CONSTRUCTION COMPRENANT DES FIBRES DE TRANSMISSION DE LUMIERE ET PROCEDE POUR PRODUIRE CE DERNIER

(30) Priority: 17.05.2002 SE 0201502
(43) Date of publication of application: 25.05.2005
(73) Proprietor: Losonczi, Aron, 6640 Csongrad (HU)
(72) Inventor: Losonczi, Aron, 6640 Csongrad (HU)
(74) Representative: Lantos, Mihaly
(86) International application number: PCT/SE2003/000798
(87) International publication number: WO 2003/097954

(56) References cited:
- EP-A2- 1 050 750
- DE-U1- 9 310 500
- FR-A1- 2 743 135
- GB-A- 1 561 142
- JP-U- S5 513 750

## Description

The present invention relates to a building object made of a cast material with a partial light transparency, comprising light transmitting fibres embedded in the cast material. The present invention also relates to a method for producing the building object comprising embedded light transmitting fibres.

For practical and decorative reasons it is usually frequent that a building object, such as a wall-, floor-or ceiling-surface is illuminated by one or several separate sources of light, e. g. so called spotlights, directed to the surface in question. Nowadays it is also popular to mount lamps in building elements, such that they are recessed and/or flush with the surface, which provide some lighting over the surface and some lighting in adjoining rooms adjacent to the surface.

A first group of building objects relates to building elements or blocks with a predetermined mechanical stability required for being used in building constructions.

FR 2745135 belongs to this first group and it discloses an illumination/lighting apparatus, which comprises the combined use of concrete or cement, and systems based on optical fibres fed with light. The optical fibres are enclosed in a protective sheath and the fibres are organize in bundles. One end of the bundles of the optical fibres is provided at a wall surface and embedded in concrete, while the other ends of the bundles of the fibres end up at a light source such as a lamp.

A second publication of this first group is GB 1561142 from which it is previously known to arrange light guiding bars comprising bundles of optical fibres, in drilled through holes between two opposite sides of a building element. Light from a light source that illuminates a rear side of the element is guided through the bars bundles of fibres to the opposite side.

A second group of semi-transparent building objects include German utility model DE G 9310500.2 that describes a disc-like thin building object that uses optical light conducting cables embedded in the cast material from which the object is made, wherein the cables are evenly spread and provide a limited light transparency. In an embodiment one of the surfaces of the disc-like object comprises a further light transparent element that serves optical tasks i.e. colouring or spreading the transmitted light. The publication is silent concerning the position and arrangement of the light transmitting cables and how such cables can be embedded in the cast material to keep their positions and not to be displaced during the casting step under the weight of the paste-like cast material. For attaining a noticeable transparence a large number of light conducting cables should be placed, which placement and positioning will become very problematic and expensive, especially when the object is thin.

The optical properties of the semi-transparent building object are largely defined by the way how the fibres are arranged within the object. One known cable arrangement is described in the cited FR 2745135 wherein the light transparent cables are spread out at one surface and focused to the light source at their other ends, whereby they have a conical positioning within the concrete body to divert the light of the light source.

In the first group of the cited building object it is unpractical, time consuming and costly, as mentioned above, to mount light sources or optical cables in prepared building elements or in built walls, ceilings or floors, in order to transfer light through the building element. Particularly, if discrete small light sources should be mounted in the building element. If a considerable part of a surface shall emit light, it is easily appreciated that the work will be lengthy since a large number of holes have to be made. Besides, only amounting of a limited number of light sources in the building element can be done by these known methods, if not influencing the strength of the element.

In case a light emitting and/or illuminating effect is desired to be provided combined with sufficient strength, the way how the light conducting fibres are arranged and embedded in the cast material will be significant, since the structure determines both the optical and mechanical properties. Uniformity is a further requirement, as different objects must have largely identical optical and mechanical properties. In this regard the cited second group of building objects has failed to describe any structure and ways for providing uniformity.

The object of the invention is to provide a semi-transparent building object made of a cast material that can be used as a building block and has the required mechanical strength, and wherein the light conducting elements are embedded and arranged in the cast material of the object in such a way to ensure the needed uniform optical and mechanical properties for different objects. A further object lies in providing a method for making such building objects.

These objects have been achieved by providing a building object and method for making the same as defined in the attached claims.

In the present building object the cast material and the embedded fibres therein constitute a building block with a homogeneous layered structure of the embedded fibres extending parallel with each other between a rear and a front surface of the block.

An advantage with this solution according to the invention is that a pre-fabricated light transmitting building block is provided. By means of the fibre ends that ends up at the lateral surface according to the invention it is thus possible to achieve light sources at certain spots evenly spread over substantially the whole lateral surface, which provides a feeling that the whole lateral surface is illuminated, alternatively is emitting light. Yet an advantage is that the light transmitting fibres are wholly integrated with the cast material presenting thereby a homogeneous structure with the capability to receive large loads.

The cast material can be of concrete, cement, gypsum, plastics, metal or the like. Suitably use is made of concrete or cement that provides an average density of the prepared building block within the range from about 2200 kg/m³ up to about 2400 kg/m³. The number of fibres per building block can be in the range from some hundred up to some thousand. The volume relation of the cast material and fibres is preferably within the range from about 1: 15 up to about 1: 8. A suitably dimension of a building block produced by the method according to the present invention is e. g. 250mm/120mm/68mm, which has a weight of about 5 kg and a concrete/fibre relation of 1: 13.

The present invention will now be described more in detail by way of examples, with reference to the accompanying drawings. In the drawing:
Fig. 1 shows in a perspective view at an angle from above of a building' block according to the invention;
Fig. 1B shows a cross-section A-A of the building block in Fig. 1A;
Fig. 1C shows a longitudinal section B-B of the building block in Fig. 1A;
Fig. 1D shows a partially perspective view of a wall built of a number of building blocks according to Fig. 1A; and
Figs. 2A-C show in schematic illustration various steps of a production method of a building block according to the present invention.

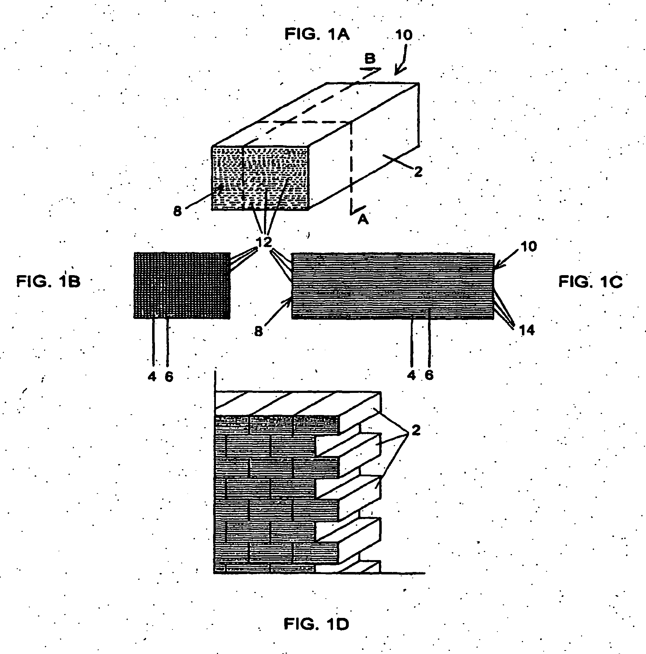

A building block 2 according to the invention is shown in figs. 1A-C. The building block comprises a cast material 4 and embedded light transmitting fibres 6 in the cast material. The fibres are arranged in the cast material from a first lateral surface 8 of the building block to an opposite second lateral surface 10. One end of a fibre 6, respectively, is arranged to end up at a position 12 at the first lateral surface 8 and the other end of the fibre is arranged to end up at a position 14 on the second lateral surface 10. Pluralities of fibres 6, suitably some hundred single fibres, are arranged in parallel in the longitudinal direction L of the building block. The fibres are evenly spread in the block 2 and the ends of the fibres thus ends up at the lateral surfaces in positions 12, 14 over substantially the whole lateral surface 8, 10, respectively. The fibres permits that light is transferred through the building block emitted from a light source arranged e. g. behind the second lateral surface 10, to the first lateral surface 8, or vice versa, whereby light is emitted from the evenly distributed fibre ends in positions over substantially the whole lateral surface.

In that fibres are evenly distributed in the block 2 and that the cast material substantially surrounds respective fibre as evident in figs. 1A-C, the block forms a homogeneous structure with high strength. Load-bearing walls of desired size and extension could thereby easily be constructed with a number of integral building blocks 2 as is evident from fig. 1D.

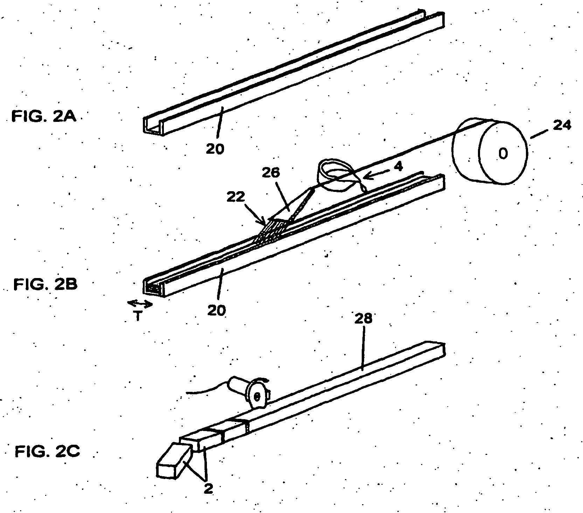

In figs. 2A-C is shown a production method according to the present invention, for production of a building block 2 according to the invention as described above. In an elongated mould 20 (see fig. 2A) of e. g. steel or wood, is in a first step a cast material 4 added.

In a second step is a layer 22 of fibres 6 arranged in the longitudinal direction of the mould 20. In a third step, the mould is subjected to a mechanical pressure and/or vibration such that the fibre layer is permitted to sink into the cast material to a desired depth. Then, steps one to three is repeated, alternatively steps two to three, until the mould is filled with the cast material and several fibre layers. Each layer 22 constitutes of a plurality of parallel fibres 6, for example some twenty fibres or more per layer. The thickness of the layer and the fibres may suitably be about 1 mm and the number of layers can be some twenty or more. The fibre layers 22 are fed continuously in the mould 20 from a fibre roll 24 via a nozzle 26 that provides for an even distribution of the fibres along the whole, transverse direction T of the mould. When the cast material 4 has become solidified, the solid moulded body 28 is divided by cutting into separate building blocks 2, e. g. with the dimension 250mm/120mm/68mm. The cutting is done such that the ends of the fibre layers 22, respectively, end up at a lateral surface 8, 10, respectively, of the building block 2.

## Claims

1. Building object made of a cast material (4) having a capability of receiving loads and comprising embedded light transmitting fibres (6), and the fibres (6) have respective first ends and second ends capable of receiving light from illumination behind the object and guide the light towards said first ends, said building object having respective predetermined height, length and width, **characterized in that** said building object is a building block (2), and the cast material and the embedded fibres therein constitute said building block (2) with a homogeneous structure, wherein said length is defined between a first lateral surface (8) and an opposite second lateral surface (10), said fibres (6) define a plurality of layers (22), in each layer (22) the fibres (6) are evenly spread and extend in longitudinal direction in parallel to each other and filling the full width of the building block (2), wherein the first end of each fibre (6) terminates at the first lateral surface (8) and the second end of each fibre (6) terminates at the second lateral surface (10), said layers filling substantially the whole height of said building block (2).

2. The building object according to claim 1, **characterized in that** the cast material (4) is concrete, cement or gypsum.

3. The building object according to claim 1, **characterized in that** said fibres (6) have a thickness from some tenth part millimeters up to a few millimetres.

4. The building object according to claim 1, **characterized in that** the building block (2) has a rectangular shape defined between three pairs of planar surfaces being mutually normal to each other.

5. Method for production of a building object (2) made of a cast material in accordance with any of the claims 1 to 4, comprising embedded light transmitting fibres (6) in a cast material (4), such as optical fibres or the like, which fibres permit transfer of light from one surface of the building object to an opposite surface **characterized by** the steps of:
- adding of a cast material (4) in an elongated mould (20) in a first step,
- arranging of a layer (22) of fibres (6) in the mould (20) in a second step, which layer being constituted by a plurality of parallel arranged fibres,
- subjecting the mould to a mechanical pressure and/or vibration in a third step such that the layer of fibres is permitted to sink into the cast material to a desired depth,
- repeating said first to third steps, alternatively second to third steps, until the mould is filled with the cast material and a plurality of fibre layers,
- permitting the cast material to become solidified and form a homogeneous body (28), and
- partitioning of the solidified, moulded body (28) into building blocks (2) by cutting, such that the respective ends of the fibre layers (22) end up at the lateral sides (8,10) of the building block (2).

6. The method according to claim 5, **characterized in that** each layer (22) being constituted of at least twenty fibres.

7. The method according to claim 5, **characterized in that** the fibre layers (22) are fed continuously in the mould (20) from a fibre roll (24) via a nozzle (26) that provides for an even distribution of the fibres along the whole, transverse direction (T) of the mould.

## Patentansprüche

1. Bauobjekt, das aus einem Gusswerkstoff (4) gebildet ist, das die Fähigkeit hat, Lasten zu tragen und das eingebettete lichtleitende Fasern (6) aufweist, wobei die Fasern (6) jeweilige erste Enden und zweite Enden aufweisen, die zum Aufnehmen von Licht von einer Beleuchtung hinter dem Objekt geeignet sind und das Licht in Richtung zu den ersten Enden führen, wobei das Bauobjekt eine jeweilige vorbestimmte Höhe, Länge und Breite aufweist, **dadurch gekennzeichnet, dass** das Bauobjekt ein Baustein (2) ist, wobei der Gusswerkstoff und die darin eingebetteten Fasern den Baustein (2) mit einer homogenen Struktur bilden, wobei die Länge zwischen einer ersten Seitenfläche (8) und einer entgegengesetzten zweiten Seitenfläche (10) definiert ist, wobei die Fasern (6) eine Mehrzahl von Lagen (22) definieren, wobei die Fasern (6) in jeder Lage (22) gleichmäßig verteilt sind und sich in Längsrichtung parallel zueinander erstrecken und die volle Breite des Bausteins (2) ausfüllen, wobei das erste Ende von jeder Faser (6) an der ersten Seitenfläche (8) endet und das zweite Ende von jeder Faser (6) an der zweiten Seitenfläche (10) endet, wobei die Lagen im Wesentlichen die gesamte Höhe des Bausteins (2) ausfüllen.

2. Bauobjekt gemäß Anspruch 1, **dadurch gekennzeichnet, dass** der Gusswerkstoff (4) Beton, Zement oder Gips ist.

3. Bauobjekt gemäß Anspruch 1, **dadurch gekennzeichnet, dass** die Fasern (6) eine Dicke von einigen Zehntel Millimetern bis zu einigen Millimetern haben.

4. Bauobjekt gemäß Anspruch 1, **dadurch gekennzeichnet, dass** der Baustein (2) eine rechteckige Form hat, die zwischen drei Paaren von ebenen Flächen definiert ist, die senkrecht zueinander sind.

5. Verfahren zur Herstellung eines Bauobjekts (2), das aus einem Gusswerkstoff hergestellt ist, gemäß einem der Ansprüche 1 bis 4, das eingebettete lichtleitende Fasern (6) in einem Gusswerkstoff (4), wie zum Beispiel optische Fasern oder dergleichen aufweist, wobei die Fasern das Übertragen von Licht von einer Oberfläche des Bauobjekts zu einer entgegengesetzten Oberfläche ermöglichen, **gekennzeichnet durch** die folgenden Schritte:
- Zugeben eines Gusswerkstoffs (4) in eine längliche Form. (20) in einem ersten Schritt,
- Anordnen einer Lage (22) von Fasern (6) in der Form (20) in einem zweiten Schritt, wobei die Lage aus einer Mehrzahl von parallel angeordneten Fasern gebildet wird,
- Ausüben eines mechanischen Drucks und/oder einer Vibration auf die Form in einem dritten Schritt, so dass die Faserlage in den Gusswerkstoff in eine gewünschte Tiefe sinken kann,
- Wiederholen der Schritte eins bis drei, alternativ der Schritte zwei bis drei, bis die Form mit dem Gusswerkstoff und einer Mehrzahl von Faserlagen gefüllt ist,
- wobei man den Gusswerkstoff sich verfestigen und einen homogenen Körper (28) bilden lässt, und
- Aufteilen des verfestigten geformten Körpers (28) in Bausteine (2) **durch** Schneiden, so dass die jeweiligen Enden der Faserlagen (22) an den Seitenflächen (8, 10) des Bausteins enden.

6. Verfahren gemäß Anspruch 5, **dadurch gekennzeichnet, dass** jede Lage (22) aus mindestens zwanzig Fasern gebildet wird.

7. Verfahren gemäß Anspruch 5, **dadurch gekennzeichnet, dass** die Faserlagen (22) aus einer Faserrolle (24) über eine Düse (26), die für eine gleichmäßige Verteilung der Fasern entlang der gesamten Querrichtung (T) der Form sorgt, kontinuierlich in die Form (20) zugeführt werden.

## Revendications

1. Objet de construction composé d'un matériau coulé (4) ayant une capacité à recevoir des charges et comprenant des fibres de transmission de la lumière intégrées (6), les fibres (6) ayant des première et des seconde extrémités respectives capables de recevoir de la lumière provenant d'un éclairage derrière l'objet et de guider la lumière vers lesdites premières extrémités, ledit objet de construction ayant une hauteur, une longueur et une largeur respectives prédéterminées, **caractérisé en ce que** ledit objet de construction est un bloc de construction (2), ledit bloc de construction (2) étant constitué par le matériau coulé et les fibres noyés dans celui-ci avec une structure homogène, où ladite longueur est définie entre une première surface latérale (8) et une seconde surface latérale opposée (10), lesdites fibres (6) définissent une pluralité de couches (22) dans chacune desquelles (22) les fibres (6) sont réparties de manière homogène et s'étendent dans la direction longitudinale parallèlement les unes aux autres et remplissent la largeur entière du bloc de construction (2), dans lequel la première extrémité de chaque fibre (6) se termine au niveau de la première surface latérale (8) et la seconde extrémité de chaque fibre (6) se termine au niveau de la seconde surface latérale (10), lesdites couches remplissant sensiblement la hauteur totale dudit bloc de construction (2).

2. Objet de construction selon la revendication 1, **caractérisé en ce que** le matériau coulé (4) est du béton, du ciment ou du gypse.

3. Objet de construction selon la revendication 1, **caractérisé en ce que** lesdites fibres (6) possèdent une épaisseur de quelques dixièmes de millimètres à quelques millimètres.

4. Objet de construction selon la revendication 1, **caractérisé en ce que** le bloc de construction (2) possède une forme rectangulaire définie entre trois paires de surfaces planes mutuellement normales les unes par rapport aux autres.

5. Procédé de production d'un objet de construction (2) composé d'un matériau coulé selon l'une quelconque des revendications 1 à 4, comprenant des fibres de transmission de la lumière intégrées (6) dans un matériau coulé (4), telles que des fibres optiques ou similaires, lesdites fibres permettant le transfert de la lumière d'une surface de l'objet de construction vers une surface opposée, **caractérisé par** les étapes consistant à :
- ajouter un matériau coulé (4) dans un moule allongé (20) à une première étape,
- disposer une couche (22) de fibres (6) dans le moule (20) à une seconde étape, ladite couche étant constituée par une pluralité de fibres disposées en parallèle,
- soumettre le moule à une pression mécanique et/ou une vibration à une troisième étape afin que la couche de fibres puisse s'enfoncer dans le matériau coulé jusqu'à une profondeur souhaitée,
- répéter ladite première à ladite troisième étapes, en variante ladite seconde à ladite troisième étapes, jusqu'à ce que le moule soit rempli du matériau coulé et d'une pluralité de couches de fibres,
- laisser le matériau coulé se solidifier et former un corps homogène (28), et
- partitionner le corps moulé et solidifié (28) en blocs de construction (2) à l'aide d'une découpe, afin que les extrémités respectives des couches de fibres (22) se terminent au niveau des côtés latéraux (8, 10) du bloc de construction (2).

6. Procédé selon la revendication 5, **caractérisé en ce que** chaque couche (22) est constituée d'au moins vingt fibres.

7. Procédé selon la revendication 5, **caractérisé en ce que** les couches de fibres (22) sont fournies en continu dans le moule (20) par un rouleau de fibres (24) via une buse (26) qui assure une répartition uniforme des fibres le long de la direction transversale entière (T) du moule.
